# EUROPEAN PATENT SPECIFICATION

(11) **EP 2 500 329 B1**
(45) Date of publication and mention of the grant of the patent: **05.04.2017**
(21) Application number: 12157915.5
(22) Date of filing: 02.03.2012
(51) Int. Cl.: C04B 22/14, C04B 40/00, C01F 7/74, C04B 103/12

(54) **A method for preparing a set accelerator, the product obtained and its use**
Verfahren zur Bereitstellung eines Satzbeschleunigers, daraus erhaltenes Produkt und Verwendung
Procédé pour la préparation d'un accélérateur de durcissement, produit obtenu et son utilisation

(30) Priority: 17.03.2011 ES 201130374
(43) Date of publication of application: 19.09.2012
(73) Proprietor: Industrias Quimicas del Ebro, S.A., 50057 Zaragoza (ES)
(72) Inventor: Rueda Alba, Angel Julian, 50016 Zaragoza (ES); Pérez Cacho, Jorge, 50016 Zaragoza (ES); Villarroya Greschuhna, Eduardo, 50016 Zaragoza (ES); Navarro Moros, Gloria, 50009 Zaragoza (ES); Elduque Palomo, Ana Isabel, 50009 Zaragoza (ES); Giménez Soro, Raquel, 50009 Zaragoza (ES)
(74) Representative: Ungria López, Javier

(56) References cited:
- EP-A1- 1 964 824
- EP-A1- 2 085 370
- EP-A2- 1 972 603
- WO-A1-2010/063777
- US-A- 5 296 213
- US-A- 5 660 625
- US-B1- 6 423 133

## Description

### OBJECT OF THE INVENTION

This invention, as stated in this specification, relates to a method for preparing a set accelerator, the product obtained and its use, such that the method object of this invention produces a complex species of aluminium silicate hydroxy sulphate that can be applied as a concrete set accelerator.

The set accelerator is obtained in solution and/or in an aqueous suspension, and can be dried to produce a solid product.

Thus, the set accelerator obtained has as an object to accelerate the hardening of dry or wet sprayed cement mixtures (mortar and concrete) and to ensure a fast development of early compressive strength, as well as reducing initial set times.

Moreover, the solid accelerator product obtained is easily soluble in water at room temperature, producing aqueous suspensions with a high concentration in Al₂O₃.
Also, the product obtained has a content in alkaline metals of less than 1% as Na₂O, which can be considered an alkali-free accelerator.

### FIELD OF APPLICATION

This document describes a method for preparing a set accelerator for application as a set accelerator for the hardening of dry or wet sprayed cement mixtures (mortar and concrete).

### BACKGROUND OF THE INVENTION

The alkali-free accelerators currently available on the market are essentially based on the reaction of an aluminium sulphate solution and an amorphous and highly reactive aluminium hydroxide.

However, one of the main problems in these last-generation alkali-free accelerator liquids is their sensitivity to the type and origin of the cement and to temperature.

Within this type of accelerators we can talk of perfect aqueous solutions and of aqueous suspensions.

Perfect solutions, with high concentrations of Al₂O₃, tend to become destabilised over time. This destabilisation occurs in two ways: by an increase in viscosity until gelification or by the crystallisation of different complex aluminium salts. For example, traces of sodium (Na⁺) in these solutions may produce crystalline species of the Natroalunite type NaAl₃(SO₄)₂(OH)₆, which act as a nucleating agent for other crystalline species of hydrated aluminium hydroxy sulphate.

This technical problem has been solved to date by using different kinds of stabilisers.

Among the stabilisers used we can include polycarboxylic organic acids and inorganic acids.

For example, Patent WO 98/18740 describes the use of carboxylic organic acids, such that included amongst the organic acids described in said patent are the following: formic acid, citric acid, lactic acid, oxalic acid, etc.

Patent WO 01/42165 describes the use as stabilisers of inorganic acids, in particular phosphoric acid; Patent WO 2004/046059 once again describes the use of inorganic stabilisers such as phosphoric acid or boric acid.

Other patents such as WO 2007/022852 describe the use of the hazardous hydrofluoric acid in the manufacture and stabilisation of concentrated aluminium solutions by forming complex species of the AlF₄⁻, AlF₂(H₂O)₄⁺ and AlF(H₂O)₅²⁺ kinds.

The introduction of the aforementioned HF in formulations of alkali-free accelerators with a high aluminium content allows reducing the time to start the concrete setting, thus ensuring a high compression resistance at a very early age for the concrete and offering sufficient short-term protection together with a correct behaviour of the concrete layer applied in the event of water penetration through the terrain on which said layer of concrete or mortar is sprayed.

In addition to organic and inorganic acids, there is another family of substances that can be used as stabilisers of aluminium in aqueous solutions. Water-soluble amines, amongst which we find alkanolamines (ethanolamine - DEAH2, triethanolamine - TEAH3), may react in mild conditions with amorphous reactive aluminium hydroxides to produce alumatranes that trap the aluminium ion in complexes, thus favouring its stability in solution.

The synthesis of this kind of aluminium complexes has been described in the literature (J. Pinkas and J. G. Verkade, Inorg. Chem. 1993, 32, 2711; R. M. Laine, D. R. Treadwell, B. L. Mueller, C. R. Bickmore, K. F. Waldner, and T. R. Hinklin, J. Mater. Chem. 1996, 6, 1441) from crystalline aluminium oxides and hydroxides, and under more aggressive working conditions due to the poor reactivity of said crystalline aluminium oxide/hydroxides.

In some cases, in particular when using certain inorganic acids such as phosphoric acid or phosphates in the production of alkali-free accelerators, the development of resistance during the setting process of the cement mixtures in which these accelerators have been used as hardeners may suffer serious delays and may even be suddenly slowed down.

As when using organic or inorganic acids, it is also possible to manufacture concentrated solutions of Al₂O₃ that are sufficiently stable for use. It is also possible to manufacture aqueous suspensions with a high Al₂O₃ content, where the main problem to be avoided is the separation of the liquid phase from the solid phase.

Thus, patent EP 0812812 describes the manufacture of an aqueous suspension of aluminium sulphate with a high content in Al₂O₃, approximately 10.5%, and where sepiolite (magnesium silicate) is used as a stabilising agent to avoid separation of the system into the two phases mentioned above. A later development with respect to this patent is described in patent EP 1878713, where the only and substantial difference is found in the introduction of aluminium hydroxide in the formulation of said suspension and the transformation of the active species from an aluminium sulphate into an aluminium hydroxy sulphate.

To form these suspensions, the concentrated solutions of Al₂O₃ without stabilising with an acid are allowed to evolve in order to precipitate species of aluminium hydroxy sulphate "in situ" with a sufficiently small particle size to prevent them from decanting.

When preparing these suspensions the key element is the stabilising agent. This additive prevents the segregation of phases during storing by providing the system with a special thixotropy. The different patents analysed (US6423133, US2010/0003412, US 5935318) comprise such different products as sepiolite and styrene-butadiene latex.

This patent presents a different kind of stabiliser, always synthetic, especially designed for introduction in alkali-free set accelerators. On the one hand, these additives incorporate soluble aluminium as Al₂O₃ and soluble silica as SiO₂ into the end product, which contributes to the development and evolution of early resistance in the concrete, and on the other hand they improve the stability of the aluminium hydroxy sulphate suspension due to the evolution of this species towards products of the polymeric aluminium silicate hydroxy sulphate type.

The formation of this kind of species, aluminium silicate hydroxy sulphate, in aqueous solution (PASS) has been widely described in the literature, and there are different patents (US 5149400, US 4981675) and different scientific papers (Hasegawa T., Hashimoto K., Onitsuka T., Goto K., Tambo N. 1991. Wat. Sci. Tech., 23, 1713-1722, Kyoto) that describe different processes for obtaining them. These aluminium silicate hydroxy sulphate species are obtained in aqueous solution and show good stability during storage. The main commercial application of PASS is its use as a coagulation agent in the treatment of drinking and waste water, while it also acts as a dephosphating agent, reducing the concentration of these species in the aqueous medium.

The type of set accelerator described in this patent intends to eliminate the disadvantages shown by other alkali-free set accelerators with high concentrations in Al₂O₃ or in active material showing an effective development of early resistance to compression as well as a reduction of the time to start of setting by introducing an active silica that is capable of starting its action as soon as it comes into contact with the cement components.

On the other hand, the drying process of the set accelerator products has been described in Spanish patent ES 2308914 and in European patent EP 1972603, owned by the same company as this file.

### DESCRIPTION OF THE INVENTION

This specification describes a method for preparing a liquid set accelerator that is of the kind of products used as alkali-free set accelerators for sprayed cementitious mixtures, such that starting from a mixture of:
◆ a highly concentrated solution or suspension, between 8.2% and 21% in Al₂O₃, prepared from aluminium sulphate in an aqueous solution with a concentration of between 1% and 12% in Al₂O₃ and/or aluminium sulphate in solid form with a concentration of between 14 and 27% in Al₂O₃ and at a temperature of between 1 and 90°C, and;
◆ a powdered gel of amorphous aluminium hydroxy carbonate in a percentage of between 0.1 and 15%, and
◆ an amine or alkanolamine, in particular a diethanolamine at a percentage of between 0.1 and 8%,
and the mixture being subject to continuous stirring, the method is based on:
◆ a first step in which a synthetic silica derivative at a percentage of between 0.1 and 10%, selected from the group of synthetic aluminium silicates, synthetic aluminium and sodium silicates, both crystalline and amorphous, amorphous precipitated silica and colloidal silica in aqueous solution;
◆ a second reaction step in an aqueous medium at a temperature between 1 and 90°C and, more preferably between 20 and 75°C, for a period between 15 and 120 minutes, and;
◆ a third maturing step at a temperature between 2 and 30°C with strong stirring for a period between 1 to 48 hours,
producing a liquid solution of an alkali-free set accelerator. This invention refers to the method for preparing an alkali-free set acceleration product of claim 1.

According to one practical embodiment this can be synthetic aluminium and sodium silicate that is easily soluble in a slightly acid medium.

It may also be any precipitated silica, silica gel or silica sol with BET between 10 and 500 m²/g.

On the other hand, subjecting the liquid solution of alkali-free set accelerator to an evaporation process at drying temperatures between 120 and 600°C for incoming air and of between 90 and 200°C for outlet air produces a solid set accelerator that is also alkali-free.

Moreover, when solubilizing the solid alkali-free set accelerator in water at any temperature, we obtain a liquid accelerator, that is, the process is reversible.

Similarly, when solubilizing the alkali-free solid accelerator in water at any temperature, we obtain suspensions and/or solutions that are stable over time.

Thus, in the final maturing step is produced the precipitation/crystallisation of complex aluminium hydroxy sulphate and aluminium silicate hydroxy sulphate species with respective formulas [Al(OH)ₐ(SO₄)_{b}(H₂O)_{c}] and [Al(OH)_{d}(SO₄)ₑ(SiOₓ)_{f}(H₂O)_{g}] and where:
a = between 0.2 and 2.5, preferably 1.25
b = between 0.25 and 1.40 preferably 0.8 and where a+2b=3
c = more than 5 if the product is in solution.
d = between 0.4 and 2.6, preferably 0.4;
e = between 0.1 and 1.4, preferably 1.2;
f = between 0.01 and 1.2, preferably 0.05;
g = more than 4 if the product is in solution.
x = more than 2 but less than or equal to 4 such that 3=d+2e+2f(x-2)

Thus, subjecting the liquid solution of alkali-free set accelerator to an evaporation process at drying temperatures between 120 and 600°C for incoming air and of between 90 and 200°C for outlet air produces a solid set accelerator that is also alkali-free.

The solid alkali-free set accelerator is a precursor of the liquid alkali-free set accelerator. This invention refers to the alkali-free set acceleration product of claim 7.

The set accelerator obtained, both liquid and solid, is useful as a set accelerator for sprayed concrete and mortar. This invention further refers to the use defined in claim 10.

Thus, the accelerator object of this invention can be prepared by a reaction in an aqueous medium and at temperatures between 1 and 90°C, in particular between 20 and 75°C, of the highly concentrated solution of aluminium sulphate (at least 25% in aluminium sulphate) with the synthetic silica derivative (in its crystalline or amorphous form) and with the aluminium hydroxy carbonate and/or the amine.

A clear or a slightly cloudy solution is obtained, depending on the reaction temperature and the reaction time, confirming the formation of complex and soluble species of aluminium.

### PREPARATION EXAMPLES

### EXAMPLE 1

27.0 g of solid aluminium sulphate (21.0% of Al₂O₃) SUFAL® 21.0 P type (Industrias Químicas del Ebro, S. A.) and 6.0 g of water were added to a solution of 57.5 g of aluminium sulphate (8.2% solution of Al₂O₃) of the SUFAL® 8.2 type (Industrias Químicas del Ebro, S. A.), at a temperature of 70°C under continuous stirring.

Subsequently, 1.5 g of precipitated and micronized silica Ebrosil® PD type (BET specific surface area 180 g/m²; DBP 190 g/100 g and d₅₀ 5 µm) and 4.0 g of aluminium hydroxyl carbonate Geloxal® 10 type (Industrias Químicas del Ebro, S. A.) were added.

After 15 minutes of stirring and after the complete incorporation of the Geloxal® 10 into the suspension, 4.0 g of diethanolamine (80% in water) were added. The suspension was kept under stirring for at least 1 hour at 70°C and after this time the mixture was cooled under 30°C. Having reached this temperature the stirring was continued for at least 12 hours, ensuring the correct crystallisation of the aluminium hydroxy sulphate species in the adequate size interval to prevent its subsequent decanting.
57.5% SUFAL® 8.2
27.0% SUFAL® 21.0 P
6.0% Osmosis-purified water
1.5% Ebrosil® PD
4.0% Geloxal® 10
4.0% DEAH (80% in water)

### EXAMPLE 2

27.0 g of solid aluminium sulphate (21.0% of Al₂O₃) SUFAL® 21.0 P type (Industrias Químicas del Ebro, S. A.) and 4.2 g of water were added to a solution of 57.5 g of aluminium sulphate (8.2% solution of Al₂O₃) of the SUFAL® 8.2 type (Industrias Químicas del Ebro, S. A.), at a temperature of 70°C under continuous stirring.

Subsequently, 3.5 g of colloidal silica at 40% in water (BET specific surface area 200 g/m²; and d₅₀ 20 nm) and 4.0 g of aluminium hydroxy carbonate Geloxal® 10 type (Industrias Químicas del Ebro, S. A.) were added slowly and under constant agitation.

After 15 minutes of stirring and after the complete incorporation of the Geloxal® 10 into the suspension, 4.0 g of diethanolamine (80% in water) were added.

The suspension was kept under stirring for at least 1 hour at 70°C and after this time the mixture was cooled under 30°C.

Having reached this temperature the stirring was continued for at least 12 hours, ensuring that the crystallisation of the aluminium hydroxy sulphate and aluminium silicate hydroxy sulphate species has occurred in the adequate size interval to prevent its subsequent decanting during storage.
57.5% SUFAL® 8.2
27.0% SUFAL® 21.0 P
4.2% Osmosis-purified water
3.3% Colloidal silica
4.0% Geloxal® 10
4.0% DEAH (80% in water)

### EXAMPLE 3

The accelerator of the invention was prepared following the process described above: 26.7 g of solid aluminium sulphate (21.0% of Al₂O₃) SUFAL® 21.0 P type (Industrias Químicas del Ebro, S. A.) and 6.3 g of water were added to an aqueous solution of 57.5 g of aluminium sulphate (8.2% solution of Al₂O₃) of the SUFAL® 8.2 type (Industrias Químicas del Ebro, S. A.), at a temperature of 30°C under continuous stirring.

Subsequently, 1.8 g of synthetic aluminium and sodium silicate and 3.8 g of aluminium hydroxy carbonate Geloxal® 10 type (Industrias Químicas del Ebro, S. A.) were added.

After 15 minutes of stirring and after the complete incorporation of the Geloxal® 10 into the suspension, 3.9 g of diethanolamine (80% in water) were added.

The suspension was kept under stirring for at least 12 hours, keeping the temperature under 30°C at all times. After this time the reaction was considered finished and the product was ready for use.
57.5% SUFAL® 8.2
26.7% SUFAL® 21.0 P
6.3% Osmosis-purified water
1.8% Aluminium and sodium silicate
3.8% Geloxal® 10
3.9% DEAH (80% in water)

### EXAMPLE 4

24.0 g of solid aluminium sulphate (21.0% of Al₂O₃) SUFAL® 21.0 P type (Industrias Químicas del Ebro, S. A.) and 6.0 g of water were added to a solution of 60.0 g of aluminium sulphate (8.2% solution of Al₂O₃) of the SUFAL® 8.2 type (Industrias Químicas del Ebro, S. A.), at a temperature of 70°C under continuous stirring.

Subsequently, 2.0 g of synthetic aluminium and sodium silicate and 4.0 g of aluminium hydroxy carbonate Geloxal® 10 type (Industrias Químicas del Ebro, S. A.) were added.

After 15 minutes of stirring and after the complete incorporation of the Geloxal® 10 into the suspension, 4.0 g of diethanolamine (80% in water) were added.

The suspension was kept under stirring for at least 1 hour at 70°C and after this time the mixture was cooled under 30°C in no longer than 4 hours. Having reached this temperature the stirring was continued for at least 12 hours, ensuring that the crystallisation of the aluminium hydroxy sulphate and aluminium silicate hydroxy sulphate species has occurred.
60.0% SUFAL® 8.2
24.0% SUFAL® 21.0 P
6.0% Osmosis-purified water
2.0% Aluminium and sodium silicate
4.0% Geloxal® 10
4.0% DEAH (80% in water)

### EXAMPLE 5

27.0 g of solid aluminium sulphate (21.0% of Al₂O₃) SUFAL® 21.0 P type (Industrias Químicas del Ebro, S. A.) and 6.0 g of water were added to a solution of 57.5 g of aluminium sulphate (8.2% solution of Al₂O₃) of the SUFAL® 8.2 type (Industrias Químicas del Ebro, S. A.), at a temperature of 30°C under continuous stirring.

Subsequently, 1.5 g of precipitated and micronized silica Ebrosil® PD type (BET specific surface area 180 g/m²; DBP 190 g/100 g and D₅₀ 5 µm) and 4.0 g of aluminium hydroxy carbonate Geloxal® 10 type (Industrias Químicas del Ebro, S. A.) were added.

After 15 minutes of stirring and after the complete incorporation of the Geloxal® 10 into the suspension, 4.0 g of diethanolamine (80% in water) were added. The suspension was kept under stirring for at least 12 hours, keeping the temperature under 30°C at all times and ensuring the correct crystallisation of the aluminium hydroxy sulphate species.
57.5% SUFAL® 8.2
27.0% SUFAL® 21.0 P
6.0% Osmosis-purified water
1.5% Ebrosil® PD
4.0% Geloxal® 10
4.0% DEAH (80% in water)

### EXAMPLE 6

27.0 g of solid aluminium sulphate (21.0% of Al₂O₃) SUFAL® 21.0 P type (Industrias Químicas del Ebro, S. A.) and 4.0 g of water were added to a solution of 57.5 g of aluminium sulphate (8.2% solution of Al₂O₃) of the SUFAL® 8.2 P type (Industrias Químicas del Ebro, S. A.), at a temperature of 30°C under continuous stirring.

Subsequently, 3.5 g of colloidal silica at 40% in water (BET specific surface area 200 g/m²; and d₅₀ 20 nm) and 4.0 g of aluminium hydroxy carbonate Geloxal® 10 type (Industrias Químicas del Ebro, S. A.) were added slowly and under constant agitation.

After 15 minutes of stirring and after the complete incorporation of the Geloxal® 10 into the suspension, 4.0 g of diethanolamine (80% in water) were added. The suspension was kept under stirring for at least 12 hours at a temperature of less than 30°C, ensuring that the crystallisation of the aluminium hydroxy sulphate and aluminium silicate hydroxy sulphate species has occurred in the adequate size range.
57.5% SUFAL® 8.2
27.0% SUFAL® 21.0 P
4.0% Osmosis-purified water
3.5% Colloidal silica
4.0% Geloxal® 10
4.0% DEAH (80% in water)

### EXAMPLE 7

Any of the solutions and/or aqueous suspensions prepared in Examples 1-6 using aluminium sulphate with 17% Al₂O₃ (SUFAL® 17.0 P type) in replacement for the 21 % aluminium sulphate and the purified water.

### EXAMPLE 8

Any of the aqueous suspensions prepared in Examples 1-7 will be evaporated to dryness in an atomiser in order to produce the corresponding powder that is easily soluble in water at room temperature. The temperature used for drying will be 300°C for incoming air and 140°C for outgoing air.

Assessment of the behaviour of these products as set accelerators was carried out using a cement mix prepared by mixing Type I, 52.5 R Portland cement and water, always maintaining a water/cement ratio of 0.32. The dose of accelerator used to assess its behaviour was always 8% and to determine the beginning and end of setting was used a manual Vicat needle.

The behaviour of this product was compared with a commercial alkali-free accelerator with a high concentration in aluminium sulphate.

**Table 1.- Behaviour in the application (cement mix) of the different accelerators described in Examples 1-6 of this document. Start and end of setting on a type I 52.5 R cement mix with a water/cement ratio of 0.32.**

| **Accelerator** | **Dose over weight of cement (%)** | **Initial set (mm:ss)** | **Final set (mm:ss)** | **Solids content (%)** |
|---|---|---|---|---|
| **Commercial product** | 8 | 01:32 | 03:53 | 43.8 |
| **Example 1** | 8 | 01:50 | 04:00 | 44.0 |
| **Example 2** | 8 | 01:51 | 04:10 | 43.9 |
| **Example 3** | 8 | 01:40 | 03:35 | 43.8 |
| **Example 4** | 8 | 01:36 | 03:29 | 42.9 |
| **Example 5** | 8 | 01:55 | 03:58 | 44.0 |
| **Example 6** | 8 | 01:56 | 04:08 | 44.0 |

In short, the liquid set accelerator obtained can be dried in controlled temperature conditions in order to produce a solid that is easily dissolved in water at ambient temperature in order to provide aqueous suspensions with a high concentration in Al₂O₃, which suspensions can be used as liquid set accelerators for hardening cement mixtures (mortar and concrete) ensuring a fast development of early compressive strength.

## Claims

1. A method for preparing an alkali-free set acceleration product for sprayed cement mixtures, such that starting from a mixture of:
◆ a highly concentrated aluminium sulphate solution or suspension, between 8.2% and 21% in Al₂O₃, prepared from aluminium sulphate in an aqueous solution with a concentration of between 1% and 12% in Al₂O₃ and/or aluminium sulphate in solid form with a concentration of between 14 and 27% in Al₂O₃ and at a temperature of between 1 and 90°C, and;
◆ a powdered gel of amorphous aluminium hydroxy carbonate in a percentage of between 0.1 and 15%, and;
◆ an amine or alkanolamine at a percentage of between 0.1 and 8%,
this starting mixture being prepared subject to continuous stirring,
◆ performing a first step in which a synthetic silica derivative at a percentage of between 0.1 and 10%, selected from the group of synthetic aluminium silicates, synthetic aluminium and sodium silicates, both crystalline and amorphous, amorphous precipitated silica and colloidal silica in aqueous solution is admixed to the starting mixture subject to stirring;
◆ performing a second reaction step of stirring in an aqueous medium at a temperature between 1 and 90°C for a period between 15 and 120 minutes, and;
◆ performing a third maturing step at a temperature between 2 and 30°C with strong stirring for a period between 1 to 48 hours,
producing a liquid solution of a set accelerator.

2. A method for preparing a set accelerator according to claim 1, **wherein** it can be any synthetic aluminium and sodium silicate that is easily soluble in a slightly acid medium.

3. A method for preparing a set accelerator according to claim 1, **wherein** it can be any precipitated silica, silica gel or silica sol with a BET between 10 and 500 m²/g.

4. A method for preparing a set accelerator according to claim 1, further subjecting the liquid solution of alkali-free set accelerator to an evaporation process at drying temperatures between 120 and 600°C for incoming air and of between 90 and 200°C for outlet air for producing a solid set accelerator that is also alkali-free.

5. A method for preparing a set accelerator according to claim 4, further solubilising the alkali-free solid set accelerator in water at any temperature for producing a liquid accelerator.

6. A method for preparing a set accelerator according to claim 4, further solubilising the alkali-free solid set accelerator in water at any temperature for producing suspensions and/or solutions that are stable over time.

7. An alkali-free set acceleration product for sprayed cement mixtures prepared according to the method described in claims 1 to 6, **characterised in that** the precipitation/crystallisation of the accelerator produced is a complex species of aluminium hydroxy sulphate and aluminium silicate hydroxy sulphate with respective formulas [Al(OH)ₐ(SO₄)_{b}(H₂O)_{c}] and [Al(OH)_{d}(SO₄)ₑ(SiOₓ)_{f}(H₂O)_{g}], and where:
a = between 0.2 and 2.5,
b = between 0.25 and 1.40, and where a+2b=3
c = more than 5 if the product is in solution,
d = between 0.4 and 2.6,
e = between 0.1 and 1.4,
f = between 0.01 and 1.2,
g = more than 4 if the product is in solution, and
x = more than 2 but less than or equal to 4 such that 3=d+2e+2f(x-2).

8. The alkali-free set acceleration product according to claim 7, **wherein** the alkali-free set accelerator is in a solid state by drying the set accelerator in a liquid state.

9. The alkali-free set acceleration product according to claim 7, **wherein** the alkali-free solid set accelerator is a precursor of the liquid alkali-free set accelerator.

10. The use of the product as described in any one of claims 7 to 9 as set accelerator for sprayed concrete and mortar.

## Patentansprüche

1. Verfahren zum Herstellen eines alkalifreien Abbindebeschleunigungsprodukts für Spritzzementmischungen, so dass ausgehend von einer Mischung aus:
• einer hochkonzentrierten Aluminiumsulfat-Lösung oder -Suspension, zwischen 8,2 % und 21 % an Al₂O₃, hergestellt aus Aluminiumsulfat in einer wässrigen Lösung mit einer Konzentration zwischen 1 % und 12 % an Al₂O₃ und/oder Aluminiumsulfat in fester Form mit einer Konzentration zwischen 14 und 27 % an Al₂O₃ und bei einer Temperatur zwischen 1 und 90 °C, und;
• einem pulverisierten Gel aus amorphem Aluminiumhydroxycarbonat in einem Prozentsatz zwischen 0,1 und 15 %, und;
• einem Amin oder Alkanolamin in einem Prozentsatz zwischen 0,1 und 8 %,
wobei diese Ausgangsmischung unter kontinuierlichem Rühren hergestellt wird,
• Durchführen eines ersten Schritts, in dem ein synthetisches Siliciumdioxidderivat in einem Prozentsatz zwischen 0,1 und 10 %, ausgewählt aus der Gruppe von synthetischen Aluminiumsilicaten, synthetischen Aluminium- und Natriumsilicaten, sowohl kristallinen als auch amorphen, amorphem Kieselhydrogel und kolloidalem Siliciumdioxid in wässriger Lösung, der Ausgangsmischung unter Rühren zugemischt wird;
• Durchführen eines zweiten Reaktionsschrittes des Rührens in einem wässrigen Medium bei einer Temperatur zwischen 1 und 90 °C für einen Zeitraum zwischen 15 und 120 Minuten, und;
• Durchführen eines dritten Reifungsschritts bei einer Temperatur zwischen 2 und 30 °C mit starkem Rühren für einen Zeitraum zwischen 1 bis 48 Stunden,
wobei eine flüssige Lösung eines Abbindebeschleunigers hergestellt wird.

2. Verfahren zum Herstellen eines Abbindebeschleunigers gemäß Anspruch 1, wobei es ein beliebiges synthetisches Aluminium- und Natriumsilicat sein kann, welches in einem schwach sauren Medium leichtlöslich ist.

3. Verfahren zum Herstellen eines Abbindebeschleunigers gemäß Anspruch 1, wobei es ein beliebiges Kieselhydrogel, Kieselgel oder Kieselsol mit einem BET zwischen 10 und 500 m²/g sein kann.

4. Verfahren zum Herstellen eines Abbindebeschleunigers gemäß Anspruch 1, bei dem außerdem die flüssige Lösung des alkalifreien Abbindebeschleunigers einem Verdampfungsvorgang bei Trocknungstemperaturen zwischen 120 und 600 °C für Zuluft und zwischen 90 und 200 °C für Abluft unterworfen wird, um einen festen Abbindebeschleuniger herzustellen, welcher ebenfalls alkalifrei ist.

5. Verfahren zum Herstellen eines Abbindebeschleunigers gemäß Anspruch 4, bei dem außerdem der alkalifreie feste Abbindebeschleuniger in Wasser bei einer beliebigen Temperatur solubilisiert wird, um einen flüssigen Abbindebeschleuniger herzustellen.

6. Verfahren zum Herstellen eines Abbindebeschleunigers gemäß Anspruch 4, bei dem außerdem der alkalifreie feste Abbindebeschleuniger in Wasser bei einer beliebigen Temperatur solubilisiert wird, um Suspensionen und/oder Lösungen herzustellen, welche über die Zeit stabil sind.

7. Alkalifreies Abbindebeschleunigungsprodukt für Spritzzementmischungen, hergestellt gemäß dem Verfahren, das in den Ansprüchen 1 bis 6 beschrieben ist, **dadurch gekennzeichnet, dass** die Ausfällung/Kristallisation des hergestellten Beschleunigers eine komplexe Spezies von Aluminiumhydroxysulfat und Aluminiumsilicathydroxysulfat mit den jeweiligen Formeln [Al(OH)ₐ(SO₄)_{b}(H₂O)_{c}] und [Al(OH)_{d}(SO₄)ₑ(SiOₓ)_{f}(H₂O)_{g}] ist, und wobei:
a = zwischen 0,2 und 2,5,
b = zwischen 0,25 und 1,40, und wobei a+2b=3
c = mehr als 5, wenn das Produkt in Lösung ist,
d = zwischen 0,4 und 2,6,
e = zwischen 0,1 und 1,4,
f = zwischen 0,01 und1,2,
g = mehr als 4, wenn das Produkt in Lösung ist, und
x = mehr als 2, aber weniger als oder gleich 4, so dass 3=d+2e+2f(x-2).

8. Alkalifreies Abbindebeschleunigungsprodukt gemäß Anspruch 7, wobei der alkalifreie Abbindebeschleuniger durch Trocknen des Abbindebeschleunigers in einem flüssigen Zustand in einem festen Zustand vorliegt.

9. Alkalifreies Abbindebeschleunigungsprodukt gemäß Anspruch 7, wobei der alkalifreie feste Abbindebeschleuniger eine Vorstufe für den flüssigen alkalifreien Abbindebeschleuniger ist.

10. Verwendung des Produkts, wie es in einem der Ansprüche 7 bis 9 beschrieben ist, als Abbindebeschleuniger für Spritzbeton und Mörtel.

## Revendications

1. Procédé de préparation d'un produit d'accélération de durcissement exempt d'alcali pour des mélanges de ciments pulvérisés, tel qu'en démarrant à partir d'un mélange de :
▪ une solution ou suspension de sulfate d'aluminium hautement concentrée entre 8,2 % et 21 % dans Al₂O₃, préparée à partir de sulfate d'aluminium dans une solution aqueuse avec une concentration entre 1 % et 12 % dans Al₂O₃ et/ou de sulfate d'aluminium de forme solide avec une concentration entre 14 et 27 % dans Al₂O₃ et à une température entre 1 et 90°C, et ;
▪ un gel pulvérulent d'hydroxycarbonate d'aluminium amorphe dans un pourcentage entre 0,1 et 15 %, et ;
▪ une amine ou alcanolamine à un pourcentage entre 0,1 et 8%,
ce mélange de départ étant préparé en étant soumis à une agitation continue par,
▪ réalisation d'une première étape, dans laquelle un dérivé de silice synthétique à un pourcentage entre 0,1 et 10 %, choisi dans le groupe constitué de silicates d'aluminium, de silicates d'aluminium et de silicates de sodium synthétiques, de silice amorphe précipitée, à la fois cristalline et amorphe et de silice colloïdale en solution aqueuse est mélangé au mélange de départ soumis à l'agitation ;
▪ réalisation d'une seconde étape de réaction consistant à agiter dans un milieu aqueux à une température entre 1 et 90°C sur une période entre 15 et 120 minutes, et ;
▪ réalisation d'une troisième étape de maturation à une température entre 2 et 30°C avec une forte agitation pendant une période entre 1 et 48 heures,
produisant une solution liquide d'un accélérateur de durcissement.

2. Procédé de préparation d'un accélérateur de durcissement selon la revendication 1, dans lequel il peut être tout silicate d'aluminium et de sodium synthétique qui est facilement soluble dans un milieu légèrement acide.

3. Procédé de préparation d'un accélérateur de durcissement selon la revendication 1, dans lequel il peut être tout silice, gel de silice ou sol de silice précipité avec une valeur BET entre 10 et 500 m²/g.

4. Procédé de préparation d'un accélérateur de durcissement selon la revendication 1, soumettant de plus la solution liquide d'accélérateur de durcissement exempt d'alcali à un procédé d'évaporation à des températures de séchage entre 120 et 600°C pour de l'air entrant et entre 90 et 200°C pour de l'air sortant pour produire un accélérateur de durcissement solide qui est également exempt d'alcali.

5. Procédé de préparation d'un accélérateur de durcissement selon la revendication 4, solubilisant de plus l'accélérateur de durcissement solide exempt d'alcali dans de l'eau à toute température pour produire un accélérateur liquide.

6. Procédé de préparation d'un accélérateur de durcissement selon la revendication 4, solubilisant de plus l'accélérateur de durcissement solide exempt d'alcali dans de l'eau à toute température pour produire des suspensions et/ou des solutions qui sont stables au cours du temps.

7. Produit d'accélération de durcissement exempt d'alcali pour des mélanges de ciments pulvérisés préparés selon le procédé décrit dans les revendications 1 à 6, **caractérisé en ce que** la précipitation/ cristallisation de l'accélérateur produit est une espèce complexe d'hydroxysulfate d'aluminium et d'hydroxysulfate silicate d'aluminium avec les formules respectives [Al(OH)ₐ(SO₄)_{b}(H₂P)_{c}] et [Al(OH)_{d}(SO₄)ₑ(SiOₓ)_{f}(H₂O)_{g}], et où :
a = 0,2 à 2,5,
b = 0,25 à 1,40, et où a+2b=3
c = plus de 5 si le produit est en solution,
d = 0,4 à 2,6,
e = 0,1 à 1,4,
f = 0,01 à 1,2,
g = plus de 4 si le produit est en solution, et
x = plus de 2 mais moins de ou de 4 de sorte que 3=d+2e+2f(x-2).

8. Produit d'accélération de durcissement exempt d'alcali selon la revendication 7, dans lequel l'accélérateur de durcissement exempt d'alcali est dans un état solide en séchant l'accélérateur de durcissement dans un état liquide.

9. Produit d'accélération de durcissement exempt d'alcali selon la revendication 7, dans lequel l'accélérateur de durcissement solide exempt d'alcali est un précurseur de l'accélérateur de durcissement exempt d'alcali liquide.

10. Utilisation du produit comme décrit dans l'une quelconque des revendications 7 à 9 comme accélérateur de durcissement pour du béton et du mortier pulvérisé.
